# EUROPEAN PATENT APPLICATION

(11) **EP 2 728 895 A1**
(43) Date of publication of application: **07.05.2014**
(21) Application number: 13180842.0
(22) Date of filing: 19.08.2013
(51) Int. Cl.: H04N 21/45, H04N 21/81

(54) **Advertisement providing apparatus, advertisement providing system and advertisement providing method**

(30) Priority: 05.11.2012 JP 2012243959
(71) Applicant: Kabushiki Kaisha Toshiba, Tokyo 105-8001 (JP)
(72) Inventor: Kikuchi, Masaaki, Tokyo, 105-8001 (JP); Ohmori, Yoshihiro, Tokyo, 105-8001 (JP)
(74) Representative: HOFFMANN EITLE

(57) **Abstract**

One embodiment provides an advertisement providing apparatus (10), including: a viewing history receiving unit (11) configured to acquire viewing history of an image, an advertisement information acquisition unit (13) configured to that acquires advertisement information related to contents of the image, an advertisement request receiving unit (17) configured to that receives an advertisement display request for a user who viewed the image or an equipment that received the image, a collation unit (14) configured to that collates the viewing history with the advertisement information for an equipment or a user designated by the advertisement display request and outputs an advertisement information related to the advertisement viewed by the user designated by the advertisement display request or the advertisement received by the equipment designated by the advertisement display request, and an advertisement transmission unit (16) configured to that transmits the advertisement information output by the collation unit (14) to the equipment designated by the advertisement display request.

## Description

### FIELD

Embodiments described herein relate generally to an advertisement providing apparatus, an advertisement providing system and an advertisement providing method.

### BACKGROUND

Conventionally, advertisements have been provided through various media. An electronic medium, such as, for example, a television broadcasting or the world wide web (WWW) using the Internet is also used for the advertisements. Such an advertisement is generally provided to users in accordance with a schedule of a provider. Therefore, it is hard for users to know in advance when the advertisements are provided, and it is difficult for users to utilize the advertisements for the purpose of comparing and weighing a product at the time of purchasing the product.

Accordingly, there is a case in the world wide web where a targeted advertisement is employed in which the users' interest is analyzed based on information of a web page read or a product purchased by the users to provide the targeted advertisement. Further, it is conceived that the targeting advertisement may be employed in a television broadcasting where the same program is viewed by a very large number of people to further facilitate the use of advertisement.

Therefore, it may be conceived that a television receiver is provided with a function which makes it possible to connect to an Internet line and allows an advertisement to be displayed via the Internet. However, it is very cumbersome for a user, who viewed an advertisement during television broadcasting, to perform operations for accessing the WWW page related to the advertisement. Further, since the broadcasting is provided in real time in television broadcasting, although it may be possible for a commercial broadcasting part between programs, it is hard in the programs to identify the product from the advertisement output as broadcasting images. Similarly, there is a problem that it is impossible to provide a targeted advertisement to a user who actually viewed a product or a shop in the broadcasting programs by a simple manipulation.

Embodiments of the present invention provide an advertisement providing apparatus, advertisement providing system and an advertisement providing method capable of serving a targeting advertisement to a viewer, who views an image such as television broadcasting, with a simple manipulation.

### BRIEF DESCRIPTION OF DRAWINGS

A general architecture that implements the various features of the present invention will now be described with reference to the drawings. The drawings and the associated descriptions are provided to illustrate embodiments and not to limit the scope of the present invention.
FIG. 1 is a block diagram illustrating an advertisement providing system including an advertisement providing apparatus according to a first embodiment of the present invention.
FIG. 2 is an explanatory view illustrating an example of a viewing history table stored in a viewing history storage unit 12.
FIG. 3 is an explanatory view illustrating an example of an advertisement data table stored in an advertisement information storage unit 13.
FIG. 4 is an explanatory view illustrating a relationship between a viewed channel and a broadcasted time of advertisement.
FIG. 5 is an explanatory view for explaining an advertisement display.
FIG. 6 is a flow chart for explaining operations of an advertisement server 10.
FIG. 7 is a block diagram illustrating a second embodiment of the present invention.
FIG. 8 is an explanatory view for explaining an advertisement display in the second embodiment.

### DETAILED DESCRIPTION

Hereinafter, embodiments of the present invention will be described with reference to the accompanying drawings.

According to one embodiment, an advertisement providing apparatus includes a viewing history receiving unit, an advertisement information acquisition unit, an advertisement request receiving unit, a collation unit, and an advertisement transmission unit. The viewing history receiving unit is configured to acquire viewing history of an image. The advertisement information acquisition unit is configured to acquire advertisement information related to contents of the image. The advertisement request receiving unit is configured to receive an advertisement display request for a user who viewed the image or an equipment that received the image. The collation unit is configured to collate the viewing history with advertisement information for an equipment or a user designated by the advertisement display request and to output advertisement information related to an advertisement viewed by the user designated by the advertisement display request or the advertisement received by the equipment designated by the advertisement display request. The advertisement transmission unit configured to that transmits advertisement information output by the collation unit to an equipment designated by the advertisement display request.

### (First Embodiment)

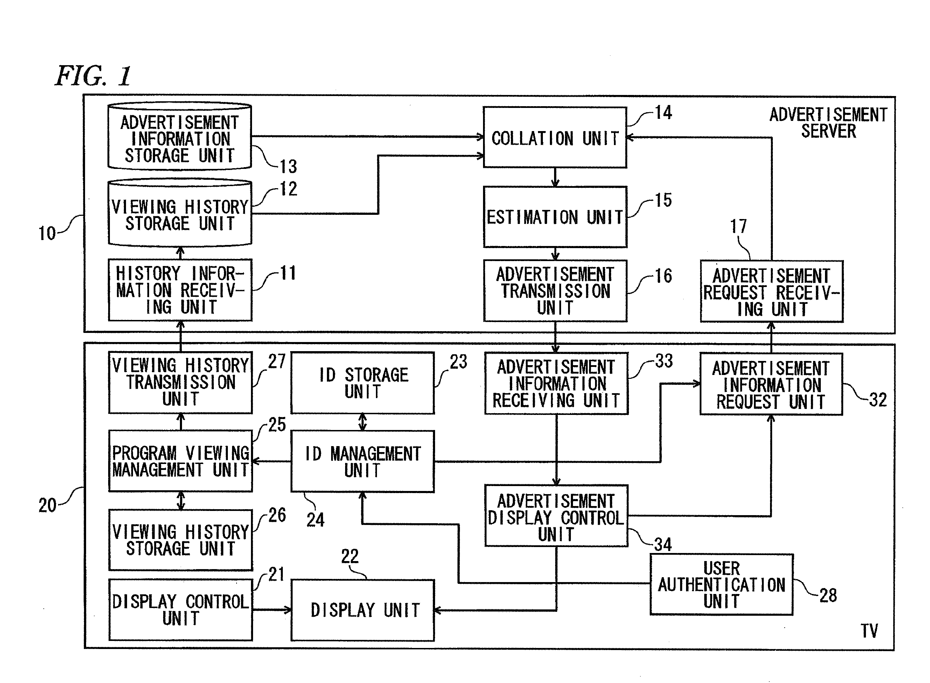

FIG. 1 is a block diagram illustrating an advertisement providing system including an advertisement providing apparatus according to a first embodiment of the present invention. The present embodiment is described using a television receiver which receives television broadcasting, but is not limited to the television broadcasting, and can be applied to an image receiver receiving various images.

In FIG. 1, a television receiver (hereinafter, referred to as TV) 20 has a function of displaying an image based on a digital broadcasting signal from a broadcast station. For example, TV 20 has a circuit unit (not illustrated) acquiring an image signal of a program transmitted through a digital broadcasting by performing, for example, a channel selection, a demodulation, a decoding, and an image signal processing for the digital broadcasting. Further, a configuration for performing a receiving processing of the digital broadcasting signal is the same as that of the conventional system, so that the illustration and description thereof are omitted. A display control unit 21 of TV 20 provides, for example, an image signal of the acquired program, to a display unit 22 to be displayed thereon.

In the present embodiment, TV 20 has an ID storage unit 23 which stores an equipment ID unique to TV 20. Further, TV 20 is provided with an ID management unit 24 that has a function of registering a user who uses TV 20. The ID management unit 24 stores a user ID for each registered user in the ID storage unit 23. The ID management unit 24 is also able to output a user ID and an equipment ID of a user who is viewing a program to a program viewing management unit 25. TV 20 is provided with a user authentication unit 28. The user authentication unit 28 detects a user, who is viewing a program, with various authentication processes, such as, for example, an image recognition process either by a login operation of the user or by a photographed output of a user photographed by a camera (not illustrated), and outputs the detected result to the ID management unit 24. The ID management unit 24 may also acquire a user ID according to the detected result of the user and output the acquired user ID to the program viewing management unit 25.

The program viewing management unit 25 is able to manage information regarding the program received and displayed, such as for example, a channel ID of the program and information of broadcasting time for each viewing time and record the information in a viewing history storage unit 26 as a viewing history for each viewing time. Further, the program viewing management unit 25 may allow the viewing history storage unit 26 to record a user ID of a user who is viewing a program corresponding to each viewing history.

The program viewing management unit 25 is able to control a viewing history transmission unit 27 to read the viewing history information stored in the viewing history storage unit 26 to transmit to a network (not illustrated) at a predetermined timing. For example, the viewing history transmission unit 27 transmits the viewing history to the advertisement server 10 through a network such as the Internet.

The advertisement server 10 serving as an advertisement providing apparatus acquires information of the viewing history of television broadcasting. For example, the history information receiving unit 11 has the same configuration as that of TV 20 of FIG. 1, and receives the information of a viewing history of television broadcasting from a plurality of television receivers capable of transmitting the viewing history through a network such as the Internet. The history information receiving unit 11 provides each received viewing history to the viewing history storage unit 12 to be stored therein.

The viewing history storage unit 12 manages each viewing history input for each equipment ID as well as for each user of each equipment, and records the each viewing history as a viewing history table.

Further, the advertisement server 10 has an advertisement information storage unit 13. The advertisement information storage unit 13 has information regarding an advertisement of a digital broadcasting program of each broadcast station and information regarding the advertisement as an advertisement table recorded therein.

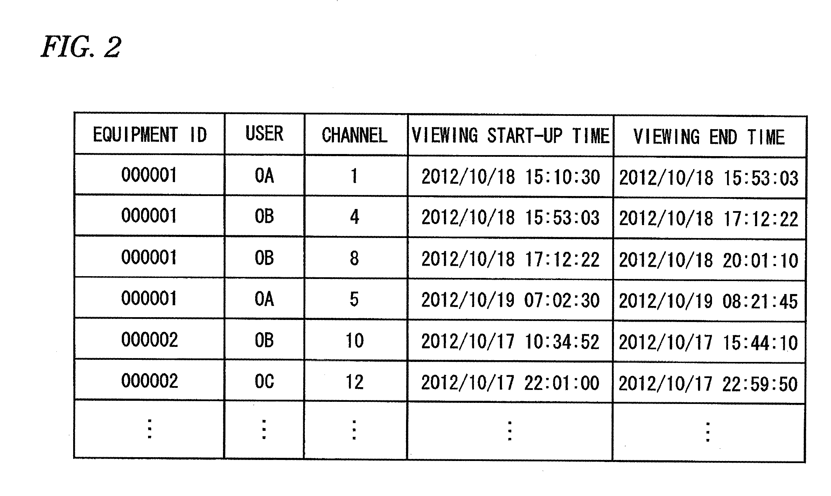

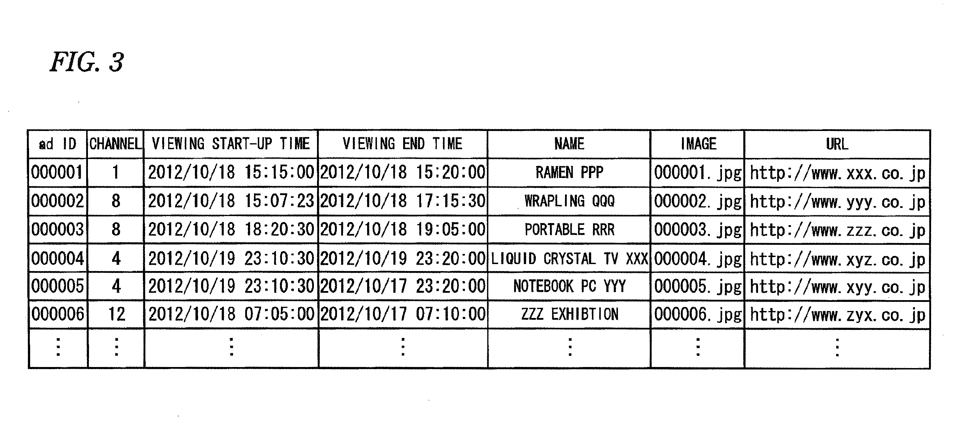

FIG. 2 and FIG. 3 are explanatory views illustrating examples of a viewing history table stored in a viewing history storage unit 12 and an advertisement data table stored in an advertisement information storage unit 13, respectively.

The viewing history table has the viewing history for each viewing time recorded therein, and in the example of FIG. 2, each viewing history includes information of an equipment ID, a user ID, a channel ID, a viewing start-up time and a viewing end time. For example, in a third record from the top of FIG. 2, it can be seen that a program broadcasted with digital broadcasting of which channel ID is 8 is viewed by a person whose user ID is 0B in an equipment of which equipment ID is 000001 during a time period from 17 hr; 12 min; 22 sec to 20 hr; 1 min; 10 sec on October 18, 2012.

Further, the advertisement data table has information for each advertisement recorded therein, in an example of FIG. 3, information of each advertisement includes information, such as for example, an advertisement ID for specifying each of all advertisements of all channels, a channel ID, an advertisement broadcasting start-up time, an advertisement broadcasting end time, a name of advertisement serving as an indicator when a user identifies an advertisement, image and a URL. Furthermore, the advertisement information may include a broadcasting program name or a corner name in the program in which the advertisement is included, and the URL may be one which indicates a shopping site. Further, a sentence, such as "This is "XX" introduced in YY corner of ZZ program", which introduces a product may be described as the name of advertisement.

For example, in a first record from the top of FIG. 3, it can be seen that an advertisement of which advertisement ID is 000001 is broadcasted through a digital broadcasting during a time period from 17 hr; 15 min; 0 sec to 20 hr; 20 min; 10 sec on October 18, 2012, and the name of the advertisement is "ramen PPP", a file name of image file regarding the advertisement is "000001.jpg", and a relevant URL is "http://www.xxx.co.jp."

That is, the advertisement data table has information (hereinafter, referred to as advertisement specific information) of a broadcasted channel and time zone regarding, for example, a product broadcasted in the program, and information (hereinafter, referred to as advertisement related information) related to, for example, the broadcasted product for each advertisement as advertisement information recorded therein. Further, the advertisement information is not limited to an advertisement broadcasted for advertising a product sale in a program of a shopping channel and the like, and the advertisement information may be either a product particularly introduced in the program, such as, for example, an information program, or a product used in the program. Furthermore, the advertisement information is not limited to an article such as a product or foodstuff, but may be various information such as a shop and travel information.

In the present embodiment, the advertisement server 10 has a collation unit 14, and the collation unit 14 collates the viewing history and the advertisement specific information to specify the advertisement information which has been viewed for each equipment or each user. The collation unit 14 is given an advertisement display request from the advertisement request receiving unit 17. Either the equipment or the user that request an advertisement display may be specified by the advertisement display request.

The collation unit 14 reads a viewing history table from the viewing history storage unit 12, reads an advertisement data table from the advertisement information storage unit 13 and collates the viewing history for the equipment or user specified by the advertisement display request with the advertisement specific information. The collation unit 14 is able to output the advertisement information which is viewed partly or entirely by the corresponding equipment or user according to the collated result through an estimation unit 15. Further, the collation unit 14 may collate viewing history for a predetermined specific period, such as for example, within one month or one week.

For example, in FIG. 2 and FIG. 3, it can be seen that the advertisement information of which advertisement ID is 000001 is broadcasted in a program of which channel ID is 1 and which has been viewed during a time period from 15 hr; 10 min; 30 sec to 15 hr; 53 min; 3 sec on October 18, 2012 for a user of which equipment ID is 000001. The collation unit 14 can output the advertisement information in response to the advertisement request from the user 0A of which equipment ID is 000001.

The estimation unit 15 estimates the advertisement information according to, for example, a viewing aspect to output the advertisement information of which estimated value is higher than a predetermined threshold to an advertisement transmission unit 16. For example, the estimation unit 15 sets a higher estimated value as an elapse time after viewing is ended becomes shorter, as the number of viewed times of the corresponding advertisement becomes larger, and as the overlapping ratio of viewing time to the broadcasting time, becomes higher. The advertisement transmission unit 16 is able to transmit the input advertisement information to a requestor of the advertisement request information through a network (not illustrated) such as the Internet.

It may be conceived that a plurality of advertisement information are output from the collation unit 14 for an advertisement request from either the same equipment or the same user. The estimation unit 15 may give a predetermined number of the advertisement information to the advertisement transmission unit 16 to be transmitted, in an order of higher estimated values.

TV 20 is equipped with the advertisement display control unit 34 which controls the displaying of the advertisement information. The advertisement display control unit 34 generates a transmission request of the advertisement information to the advertisement server 10 according to, for example, a manipulation of a user, so that the transmission request is output to an advertisement information requesting unit 32. The advertisement information requesting unit 32 is given an equipment ID and a user ID from the ID management unit 24, and transmits the advertisement information request along with the equipment ID and the user ID as an advertisement display request to the advertisement server 10 through a network such as the Internet.

Further, TV 20 has an advertisement information receiving unit 33 which receives the advertisement information from the advertisement server 10. The advertisement information receiving unit 33 outputs the advertisement information received through a network (not illustrated) to the advertisement display control unit 34. The advertisement display control unit 34 generates a display data for displaying the advertisement based on the advertisement information and outputs the generated display data to the display unit 22. By doing this, it is possible to display the advertisement display on a display screen of the display unit 22 based on the advertisement information.

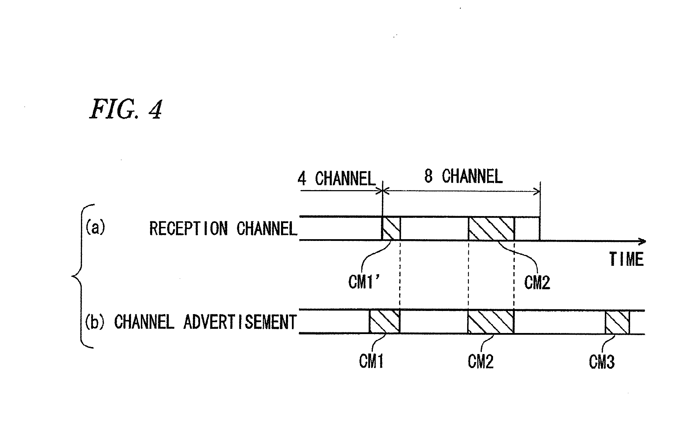

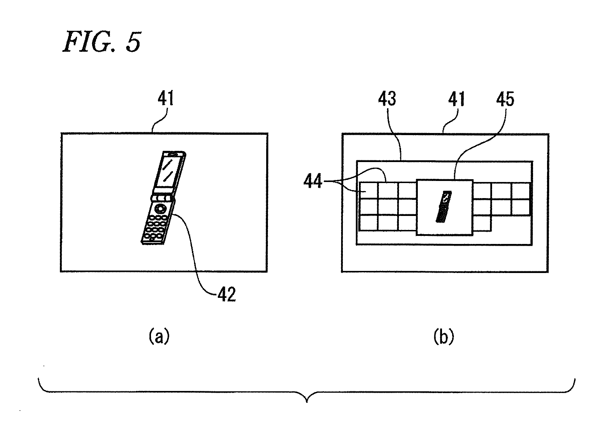

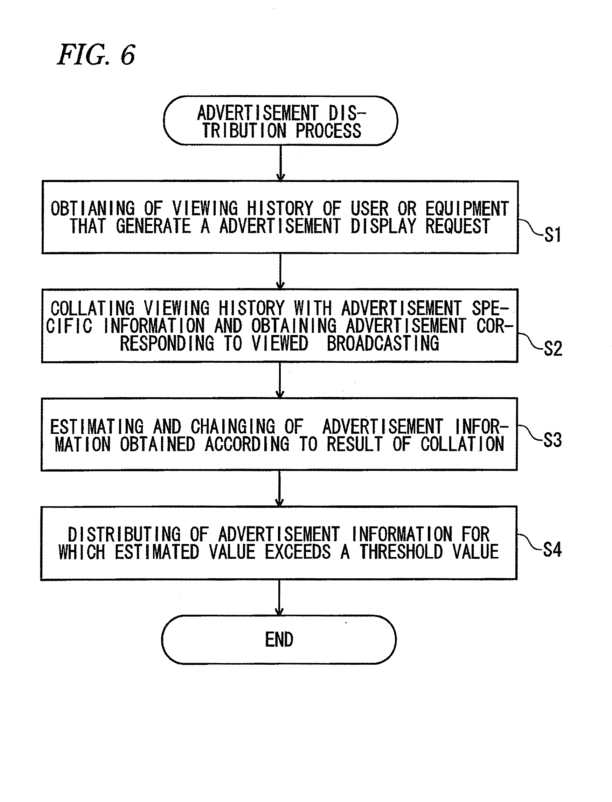

Next, the operation of the embodiment configured as described above will be described with reference to FIGS. 4 to 6. FIG. 4 is an explanatory view illustrating a relationship between a viewing channel and a broadcasted time of advertisement. FIG. 5 is an explanatory view for explaining an advertisement display. FIG. 6 is a flow chart for explaining operations of an advertisement server 10.

TV 20 receives a digital broadcasting of a channel according to a channel selection manipulation of a user to output the broadcasting program on the display unit 22 as images. The program viewing management unit 25 of TV 20 allows the viewing history storage unit 26 to record the viewing history in the viewing history storage unit 26 each time the user views the digital broadcasting. The information of the viewing history is transmitted to the advertisement server 10 by the viewing history transmission unit 27. At step S1 of FIG. 6, the history information receiving unit 11 of the advertisement server 10 gives the received history information to the viewing history storage unit 12 to be recorded therein. By doing this, the viewing history table, for example, as illustrated in FIG. 2 is prepared in the viewing history storage unit 12.

In the meantime, the advertisement server 10 maintains the advertisement information related to an advertisement included in the digital broadcasting in the advertisement information storage unit 13 as an advertisement data table. For example, the advertisement data table as illustrated in FIG. 3 is stored in the advertisement information storage unit 13.

At this time, it is assumed that a viewing as illustrated in FIG. 4 is performed. The axis of abscissas shown in FIG. 4 represents a time. FIG. 4(a) represents a change of a reception channel by a predetermined television receiver of a predetermined user. FIG. 4(b) represents a display timing of the advertisement of the channel (hereinafter, referred to as 8channel) of which channel ID is 8. In this case, it is assumed that a predetermined user 0 switches to the reception channel to perform a viewing, as illustrated in FIG. 4(a), in the predetermined television receiver having the same configuration as TV 2.

FIG. 4 represents an example in which a program of a 4-channel is viewed in a predetermined time zone, and continuously switches to a program of the 8-channel and then stops viewing. FIG. 4(b) represents that advertisements CM1 to CM3 are broadcasted in the 8-channel during a period represented by diagonal lines. It can be seen that CM1' which is a portion of the advertisement CM1 and the advertisement CM2 has been viewed according to the reception as illustrated in FIG. 4(a), as is known from the comparison of FIG. 4(a) and FIG. 4(b). The information of the viewing history as illustrated in FIG. 4(a) is stored in the viewing history storage unit 12 of the advertisement server 10.

In this case, it is assumed that viewing history corresponding to FIG. 4(a) is recorded in a second and a third records from a top of FIG. 2. That is, it is assumed that the user 0B of an equipment of which equipment ID is 000001 starts and ends viewing of the 4channel at 15 hr; 53 min; 03 sec; and 17 hr; 12 min; 22 sec; on October 18, 2012, respectively and simultaneously, switches the channel to start viewing of 8-channel and ends the viewing at 20 h; 1 min; 10 sec.

Further, it is assumed that the advertisements CM1 and CM2 illustrated in FIG. 4(b) are recorded in a second and third records from the top of FIG. 3. That is, the advertisement CM1 is an advertisement of which advertisement ID is 000002 and which is broadcasted in a program of digital broadcasting of the 8-channel during a time period from 15 hr; 7 min; 23 sec; to 17 hr; 15 min; 30 sec on October 18, 2012, and the advertisement CM2 is an advertisement of which advertisement ID is 000003 and which is broadcasted in a program of digital broadcasting of the 8channel during a time period from 18 hr; 20 min; 30 sec; to 19 hr; 5 min; 0 sec on October 18, 2012.

FIG. 5A represents a scene of the advertisement CM2 displayed on a display screen 41 of a display unit 22 of TV 20. The advertisement CM2 is a program which introduces a mobile phone. From FIG. 3, it can be seen that there is an image file 000003.jpg as an image in the advertisement CM2 and there is http://www.zzz.co.jp as a URL regarding to the advertisement CM2.

Here, it is assumed that a user requests to display an advertisement. When the advertisement display request is generated according to the manipulation of the user, the advertisement display control unit 34 allows the display unit 22 to display an advertisement display region 45 as illustrated in FIG. 5(b), and simultaneously, generates an advertisement information transmission request for the advertisement server 10. Further, FIG. 5(b) represents a menu screen 43 in an information acquisition mode where the user accesses such as the Internet to acquire information, and icon marks 44 for accessing the respective information provision source are displayed. The advertisement display control unit 34 may automatically generate the advertisement display request, for example, through setting of the information acquisition mode by the user.

The advertisement display request is sent to the advertisement information requesting unit 32, the advertisement information requesting unit 32 reads the equipment ID and user ID from the ID management unit 24, and transmits the advertisement display request containing the equipment ID and user ID to the advertisement server 10 through a network (not illustrated) such as the Internet.

The advertisement server 10 receives the advertisement display request through the advertisement request receiving unit 17. The collation unit 14 collates the viewing history with the advertisement specific information for the equipment and user that has requested an advertisement display request to specify the advertisement information which has been viewed. That is, collation unit 14 determines whether the program including corresponding advertisement is being viewed by the equipment and user that generate the advertisement display request in a broadcasting time of an advertisement designated by the advertisement specific information.

For example, in the examples of FIGS. 2 to 4, when the user of which the equipment ID is 000001 and user ID is 0B performs a manipulation of requesting an advertisement display request, the collation unit 14 reads advertisement information related to advertisements which correspond to advertisement CM1 and advertisement CM3 and of which advertisement IDs are 000002 and 000003, respectively, to output to the estimation unit 15 (step S2).

At step S3, the estimation unit 15 estimates the input advertisement information and compares the estimated value of each advertisement information to determine advertisement information to be transmitted (step S3). For example, in a case where there is a setting to transmit only single advertisement information, the estimation unit 15 may select one advertisement information that has a larger overlapping ratio of viewing time to the broadcasting time of the advertisement information. For example, in an example of FIG. 4, for the advertisement CM1, only a portion of which is viewed, while for the advertisement CM2, the entirety of which is viewed, so that the estimation unit 15 may determine the advertisement information related to the advertisement CM2 which is to be transmitted. The advertisement transmission unit 16 transmits the advertisement information to be transmitted determined by the estimation unit 15 to an equipment of a requestor of the advertisement display request through a network (not illustrated) such as the Internet (step S4).

The advertisement information from the advertisement server 10 is received by the advertisement information receiving unit 33. The advertisement information receiving unit 33 outputs the received advertisement information to the advertisement display control unit 34. The advertisement display control unit 34 generates the display data for displaying advertisement, based on the advertisement information and outputs the generated display data to the display unit 22. By doing this, the advertisement display which is based on advertisement information is displayed in the advertisement display region 45 on the display screen 41 of the display unit 22

In the present embodiment as described above, the advertisement information related to the advertisement viewed by the user is specified based on the viewing history of the television broadcasting of the user can be served, so that a targeting advertisement according to the viewing history of the user. Therefore, it is possible to display an advertisement display that is wanted by a user. Further, the advertisement information related to the advertisement viewed by the user is selectively transmitted according to a viewing aspect of a user, so that it may be possible to prevent a transmission amount of information from being excessively increased, and simultaneously, to display only the advertisement display that the user really wants.

### (Modified Example)

In the first embodiment, the present invention is applied to an image from the digital broadcasting, but the present invention is not limited thereto, and an Internet Protocol TV (IPTV) or Video On Demand (VOD) distributed through the Internet may be a target object to which the present invention is applied. In a case where the VOD is the target object, the manipulation history storage unit 26 and the advertisement storage unit 13 store an image ID instead of the channel. Further, these units store the time elapsed from the head of image contents instead of the viewing start-up time and end time. Accordingly, the advertisement may also be displayed on a medium other than the image which is based on the digital image signal.

Further, the estimation unit 15 of the first embodiment sets a higher estimated value as an elapse time after viewing is ended becomes shorter , as the number of viewed times of the corresponding advertisement becomes larger, and as the overlapping ratio of viewing time to the broadcasting time of the advertisement information becomes higher, but not limited thereto, and may set a higher estimated value as the elapse time from the end of viewing becomes closer to a predetermined time, as the number of viewed times of the corresponding advertisement becomes closer to a predetermined number of times, and as the ratio of a predetermined time period during a time period in which viewing time is overlapped with the broadcasting time of the advertisement information becomes higher. Otherwise, a higher estimated value may be set as an elapse time after the user performs manipulation such as a channel change becomes shorter, and as a ratio of viewing the advertisement information with the same rate becomes shorter. Further, as the user manipulates more on the image, such as for example, a bookmark is attached to image, a chapter is set for image, images are dubbed, or images are archived in a digital versatile disc (DVD) or Blu-ray Disc (BD), a higher estimated value may be set. Accordingly, it is possible to select more effective advertisement.

### (Second Embodiment)

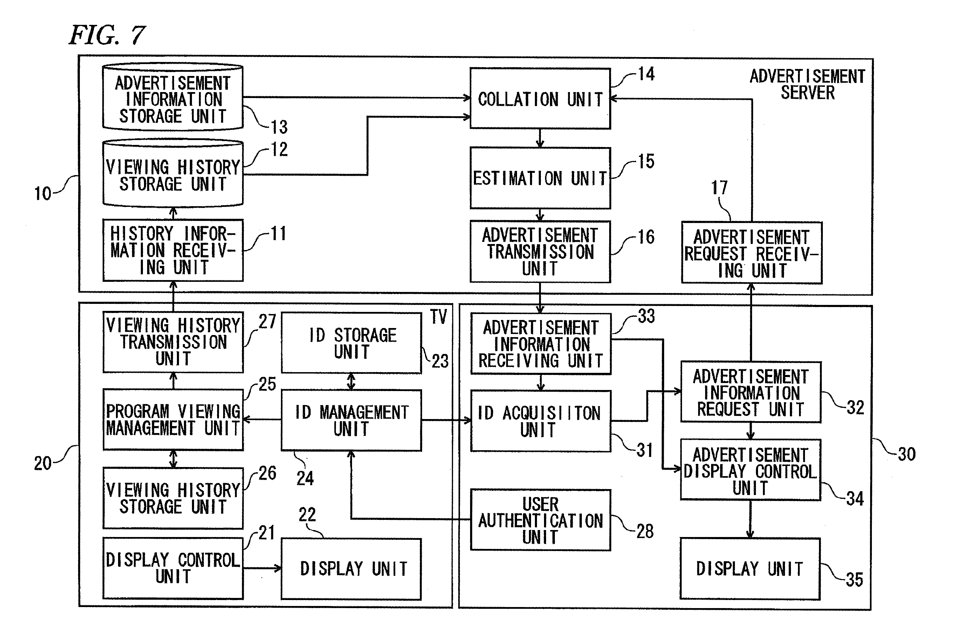

FIG. 7 is a block diagram illustrating a second embodiment of the present invention. In FIG. 7, the same constitutional elements as those of FIG. 1 are given the same reference numerals, and the description thereof will be omitted.

In the first embodiment, descriptions will be made for an example in which the advertisement is displayed on TV 20 through which the program is viewed. In contrast, the present embodiment describes an example in which advertisement is displayed on a display terminal which is paired with TV 20 through which the program is viewed, and displays in association with TV 20.

A display terminal 30 of the present embodiment is provided with a circuit unit configured by the same configuration of the user authentication unit 28, the advertisement information requesting unit 32, the advertisement information receiving unit 33 and the advertisement display control unit 34 that are installed in TV 20 of FIG. 1. Further, the configuration of these components is omitted in TV 20 of FIG. 7, but TV 20 of FIG. 7 may also be equipped with the components.

The display terminal 30 further includes an ID acquisition unit 31 and a display unit 35. The ID acquisition unit 31 acquires the equipment ID of TV 20 and a user ID of a user who is viewing through TV 20 from the ID management unit 24 of TV 20 through a wired or wireless network (not illustrated). The ID acquisition unit 31 outputs the acquired equipment ID and the user ID to the advertisement information requesting unit 32. By doing this, the advertisement information requesting unit 32 of the display terminal 30 is able to transmit an advertisement display request along with the equipment ID and the user ID to the advertisement server 10 through a network such as the Internet.

The advertisement display control unit 34 is given advertisement information from the advertisement information receiving unit 33, and generates display data for displaying advertisement and outputs the generated display data to the display unit 35. The display unit 35 displays an advertisement display based on the advertisement information on a display screen.

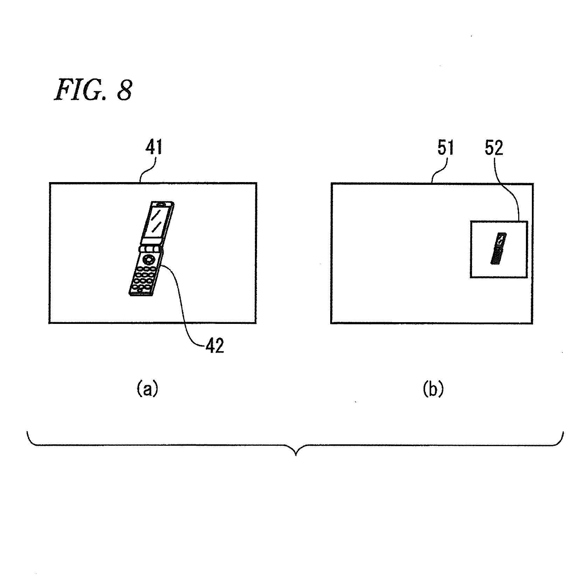

The embodiment configured as described above will be described with reference to the explanatory view of FIG. 8. FIG. 8 is view for explaining the advertisement display.

The same operations as the first embodiment are also performed in the present embodiment. That is, TV 20 receives digital broadcasting of a channel according to a channel selection manipulation of a user, the program viewing management unit 25 stores a viewing history in the viewing history storage unit 26 each time the user views the digital broadcasting. The viewing history transmission unit 27 transmits information of the viewing history to the advertisement server 10.

In the meantime, the advertisement server 10 receives the history information by the history information receiving unit 11 and gives the received history information to the viewing history storage unit 12 to be recorded therein. Further, the advertisement server 10 maintains the advertisement information related to the advertisement included in the digital broadcasting as the advertisement information data table 13.

Here, it is assumed that a user requests to display an advertisement. The display terminal 30 acquires the equipment ID and the user ID by the ID acquisition unit 31 from the ID management unit 24. When a request to display an advertisement is generated by the manipulation of a user, the advertisement display control unit 34 of the display terminal 30 generates a transmission request of the advertisement information to the advertisement server 10. The request to display advertisement is sent to the advertisement information requesting unit 32, and the advertisement information requesting unit 32 reads the equipment ID and the user ID from the ID management unit 24 and transmits an advertisement display request including the equipment ID and the user ID of the user who manipulated the advertisement display request to the advertisement server 10.

In the advertisement server 10, the collation unit 14 collates the viewing history with information specific to advertisement and specifies the advertisement information which has been viewed to be output for the equipment and user that performed the advertisement display request. The estimation unit 15 estimates the advertisement information from the collation unit 14 and compares an estimated value of each advertisement information to determine the advertisement information to be transmitted. The advertisement transmission unit 16 transmits the advertisement information which is determined to be transmitted to a requestor of the advertisement request information through a network (not illustrated) such as the Internet.

The advertisement information from the advertisement server 10 is received by the advertisement information receiving unit 33 of the display terminal 30. The advertisement information receiving unit 33 outputs the received advertisement information to the advertisement display control unit 34, and the advertisement display control unit 34 generates a display data for displaying advertisement based on the advertisement information and outputs the generated display data to the display unit 35. By doing this, the advertisement display based on the advertisement information is displayed on the display screen of the display unit 35.

For example, as illustrated in FIG. 8(a), it is assumed that a user has viewed the advertisement displayed on the display screen 41 of the display unit 22 of TV 20. Regarding the viewing of the advertisement, corresponding advertisement display is displayed in the advertisement display area 52 on the display screen 51 of the display unit 35 as illustrated in FIG. 5(b).

As described above, the same effect as the first embodiment may also be obtained in the present embodiment.

Further, although in the above-described embodiment, an example is described in which a display terminal paired with the television receiver reads the equipment ID and the user ID of the television receiver to generate an advertisement display request, in a case where all users of each television receiver can be uniquely specified by the user ID, it is possible to display the advertisement display, based on the advertisement information related to the advertisement which has been viewed by a user, on the display terminal only by manipulation of the display terminal without pairing the display terminal with the television receiver by setting a user ID which is the same as the user ID registered with the television receiver on the display terminal.

The present invention is not limited the embodiments described above, and various changes can be made without departing from the gist of embodiments of invention. Further, various inventions are included in the embodiments, and various inventions can be extracted by appropriately combining plural constitutional elements disclosed therein. For example, even when several constitutional elements are deleted among all the constitutional elements, it is possible to solve the problems described in paragraph of the problems to be solved in the invention, and when the effect described in the paragraph of an effect of invention can be obtained, a configuration having the several elements deleted therein may be extracted as the invention.

## Claims

1. An advertisement providing apparatus (10), comprising:
a viewing history receiving unit (11) configured to acquire viewing history of an image;
an advertisement information acquisition unit (13) configured to acquire advertisement information related to a content of the image;
an advertisement request receiving unit (17) configured to receive an advertisement display request for a user who viewed the image or an equipment that received the image;
a collation unit (14) configured to collate the viewing history with advertisement information for an equipment or a user designated by the advertisement display request and to output advertisement information related to an advertisement viewed by the user designated by the advertisement display request or the advertisement received by the equipment designated by the advertisement display request; and
an advertisement transmission unit (16) configured to transmit advertisement information output by the collation unit (14) to an equipment designated by the advertisement display request.

2. The advertisement providing apparatus (10) of claim 1, further comprising an estimation unit (15) that estimates advertisement information output by the collation unit (14) based on the viewing aspect of the equipment or the user designated by the advertisement display request to obtain an estimated value, and distributes only the advertisement information which obtained the estimated value exceeding a predetermined threshold value, from advertisement transmission unit (16).

3. The advertisement providing apparatus (10) of claim 1 or 2, wherein the collation unit (14) obtains an advertisement information related to an advertisement received by an equipment or an advertisement viewed by a user designated by the advertisement display request either based on a channel ID which has been viewed obtained by the viewing history, the viewing time information, and a channel ID with which the advertisement obtained by the advertisement information is broadcasted and information of the broadcasting time, or based on a viewed image ID obtained by the viewing history and information of the viewing time from the head of the image, an image ID for which advertisement obtained by the advertisement information is broadcasted and information of the viewing time from the head of the image.

4. The advertisement providing apparatus (10) of any one of claims 1 to 3, wherein the viewing history receiving unit (11) receives the viewing history transmitted from a plurality of image receivers which receive the image, and
the advertisement transmission unit (16) distributes the advertisement information to the image receiver which generated the advertisement display request.

5. The advertisement providing apparatus (10) of any one of claims 1 to 3, wherein the viewing history receiving unit receives the viewing history transmitted from the plurality of image receivers which receive the image, and
the advertisement transmission unit (16) distributes the advertisement information to a display terminal related to the image receiver which generated the advertisement display request.

6. The advertisement providing apparatus (10) of any one of claims 1 to 3, wherein the image is any one of a television broadcasting image, an IPTV image and a VOD image.

7. An advertisement providing system, comprising:
an advertisement providing apparatus (10) which includes:
a viewing history receiving unit (11) configured to acquire a viewing history of image;
an advertisement information acquisition unit (13) that acquires advertisement information related to contents of the image; and
an advertisement request receiving unit (17) that receives an advertisement display request for a user who viewed the image or an equipment received the image,
a collation unit (14) that collates the viewing history with the advertisement information for an equipment or a user designated by the advertisement display request and outputs an advertisement information related to the advertisement viewed by the user designated by the advertisement display request or the advertisement received by the equipment designated by the advertisement display request; and
an advertisement transmission unit (16) that transmits the advertisement information output by the collation unit (14) to the equipment designated by the advertisement display request; and
a television receiver (20) which includes:
a viewing history transmitting unit (27) configured to transmit the viewing history to the advertisement providing apparatus (10),
an advertisement information requesting unit (32) configured to transmit the advertisement information display request for a user who viewed the television broadcasting or a self-device,
an advertisement information receiving unit (33) configured to receive the advertisement information distributed from the advertisement information distribution unit, and
an advertisement display control unit (34) configured to allow an advertisement information based on the advertisement information received by the advertisement information receiving unit.

8. An advertisement providing method, comprising:
acquiring a viewing history of television broadcasting;
acquiring an advertisement information related to an advertisement broadcasted by the television broadcasting;
receiving an advertisement display request for a user who viewed the television broadcasting or an equipment received the television broadcasting;
collating the viewing history with the advertisement information for the equipment or the user designated by the advertisement display request and outputting an advertisement information related to the advertisement viewed by the user designated by the advertisement display request or the advertisement received by the equipment designated by the advertisement display request; and
transmitting the advertisement information output according to result of the collating to the equipment designated by the advertisement display request.
